# EUROPEAN PATENT APPLICATION

(11) **EP 1 329 790 A2**
(43) Date of publication of application: **23.07.2003**
(21) Application number: 03001036.7
(22) Date of filing: 17.01.2003
(51) Int. Cl.: G06F 1/00

(54) **Mobile communications terminal and data transmitting method**

(30) Priority: 17.01.2002 JP 2002009061
(71) Applicant: NTT DoCoMo, Inc., Tokyo 100-6150 (JP)
(72) Inventor: Morota, Satoshi, Int. Prop. Dpt, NTT DoCoMo, Inc., Chiyoda-ku, Tokyo 100-6150 (JP); Urakawa, Yasutaka, Int. Pro. Dpt, NTT DoCoMo, Inc., Chiyoda-ku, Tokyo 100-6150 (JP); Kato, Tatsuya, Int. Pro. Dpt, NTT DoCoMo, Inc., Chiyoda-ku, Tokyo 100-6150 (JP); Ishii, Kenji, Int. Property Dpt, NTT DoCoMo, Inc., Chiyoda-ku, Tokyo 100-6150 (JP); Fujita, Masanori, Int. Pr. Dpt., NTT DoCoMo, Inc., Chiyoda-ku, Tokyo 100-6150 (JP)
(74) Representative: GROSSE BOCKHORNI SCHUMACHER

(57) **Abstract**

The present invention provides a mobile communications terminal and a data transmitting method which can prevent the alteration of programs that are the object of virus protection study. In the mobile communications terminal 10 of the present invention, a digital signature is applied to the program 26 that is the object of virus protection study using (for example) a public key encryption program stored in an IC chip 12 such as a UIM or the like. Accordingly, in cases where this program is transmitted via a network 28 by the user, the alteration of the program 26 by a third party at an intermediate point in the network 26 can be prevented. Furthermore, the presence or absence of any alteration can be verified in the virus protection study object program receiving server 32 that receives this program 26. Moreover, since the transmitting party can be easily and securely specified by the digital signature, the safety of the virus protection study object program receiving server 32 that receives programs 26 that are the object of virus protection study is improved.

## Description

### BACKGROUND OF THE INVENTION

### Field of the Invention

The present invention relates to a mobile communications terminal and a data transmitting method which are used to study the contents of computer viruses.

### Description of the Related Art

Conventionally, in cases where data and programs suspected of containing computer viruses (hereafter referred to as "programs that are the object of virus protection study") are sent by users to organizations such as virus protection laboratory or the like, these programs that are the object of virus protection study are temporarily stored on floppy disks (FD), and these FD are sent by postal mail in order to prevent alteration of the programs that are the object of virus protection study. Accordingly, a considerable amount of time passes between the time that the user sends the FD and the time that this FD is received by the virus countermeasure center or the like, so that pattern files for computer viruses contained in programs that are the object of virus protection study cannot be quickly prepared. Consequently, there is a demand for a technique that makes it possible to transmit programs that are the object of virus protection study directly from user terminals to virus protection laboratory or the like via a network.

However, in cases where programs that are the object of virus protection study are transmitted via a network, because of the nature of such information communications, there is a danger that the programs that are the object of virus protection study may be altered by a third party at an intermediate point in the network. Furthermore, even in cases where programs that are the object of virus protection study are altered, the fact that such an alteration has been made cannot be confirmed by parties other than the user who has transmitted the program in question.

### SUMMARY OF THE INVENTION

The present invention was devised in order to solve the abovementioned problems; it is an object of the present invention to provide a mobile communications terminal and a data transmitting method which make it possible to prevent the alteration of programs that are the object of virus protection study.

The mobile communications terminal of the present invention applies a digital signature to a program that is the object of virus protection study using a public key encryption program stored in an IC chip in which information that distinguishes the user is stored, and transmits the abovementioned program that is the object of virus protection study to which the abovementioned digital signature has been applied to a server that receives programs that are the object of virus protection study.

In this mobile communications terminal, for example, a digital signature is applied to a program that is the object of virus protection study using a public key encryption program that is stored in an IC chip such as a UIM (user identity module) or the like. Accordingly, in cases where the user transmits this program via a network, it is possible to verify the presence or absence of any alteration [of the program] in the server (for the reception of programs that are the object of virus protection study) that has received this program, so that alteration of the program by a third party at an intermediate point in the network can be prevented. Furthermore, since the party transmitting the program can be easily and securely specified by the digital signature, the safety of the server that receives programs that are the object of virus protection study can be improved.

Furthermore, it is desirable that terminal identifying information that specifies the terminal type of the mobile communications terminal be transmitted to the server that receives programs that are the object of virus protection study together with the program that is the object of virus protection study to which the [abovementioned] digital signature has been applied. In this case, a mobile communications terminal used for the virus protection study of programs that are the object of virus protection study can easily be prepared on the basis of the terminal identifying information received by the server that receives programs that are the object of virus protection study.

Furthermore, it is desirable that software information that relates to the software that is installed be transmitted to the server that receives programs that are the object of virus protection study together with the program that is the object of virus protection study to which the [abovementioned] digital signature has been applied. In this case, a mobile communications terminal used for the virus protection study of programs that are the object of virus protection study can easily be prepared on the basis of the software information such as software name, version and the like that is received by the server that receives programs that are the object of virus protection study.

The data transmitting method of the present invention [is a method in which] a digital signature is applied to a program that is the object of virus protection study in a mobile communications terminal using a public key encryption program stored in an IC chip in which information that distinguishes the user is stored, and the abovementioned program that is the object of virus protection study to which said digital signature has been applied is transmitted from the abovementioned mobile communications terminal to a server that receives programs that are the object of virus protection study.

In this data transmitting method, a digital signature is applied to the program that is the object of virus protection study using (for example) a public key encryption program stored in an IC chip such as a UIM or the like in the mobile communications terminal. Accordingly, in cases where this program is transmitted by the user via a network, it is possible to verify the presence or absence of any alteration [of the program] in the server (for the reception of programs that are the object of virus protection study) that has received this program, so that alteration of the program by a third party at an intermediate point in the network can be prevented. Furthermore, since the party transmitting the program can be easily and securely specified by the digital signature, the safety of the server that receives programs that are the object of virus protection study can be improved.

Furthermore, it is desirable that terminal identifying information that specifies the terminal type of the mobile communications terminal be transmitted to the server that receives programs that are the object of virus protection study together with the program that is the object of virus protection study to which the [abovementioned] digital signature has been applied. In this case, a mobile communications terminal used for the virus protection study of programs that are the object of virus protection study can easily be prepared on the basis of the terminal identifying information received by the server that receives programs that are the object of virus protection study.
Furthermore, it is desirable that software information that relates to the software that is installed in the mobile communications terminal be transmitted to the server that receives programs that are the object of virus protection study together with the program that is the object of virus protection study to which the [abovementioned] digital signature has been applied. In this case, a mobile communications terminal used for the virus protection study of programs that are the object of virus protection study can easily be prepared on the basis of the software information such as software name, version and the like that is received by the server that receives programs that are the object of virus protection study.

### BRIEF DESCRIPTION OF THE DRAWINGS

Fig. 1 is a diagram which shows a mobile communications terminal constituting an embodiment of the present invention;
Fig. 2 is a diagram which shows the processing of the encryption processing part of the mobile communications terminal shown in Fig. 1; and
Fig. 3 is a flow chart which shows a modification of the specimen data.

### DESCRIPTION OF THE PREFERRED EMBODIMENTS

Preferred embodiment of the mobile communications terminal and data transmitting method of the present invention will be described in detail below with reference to the attached figures.

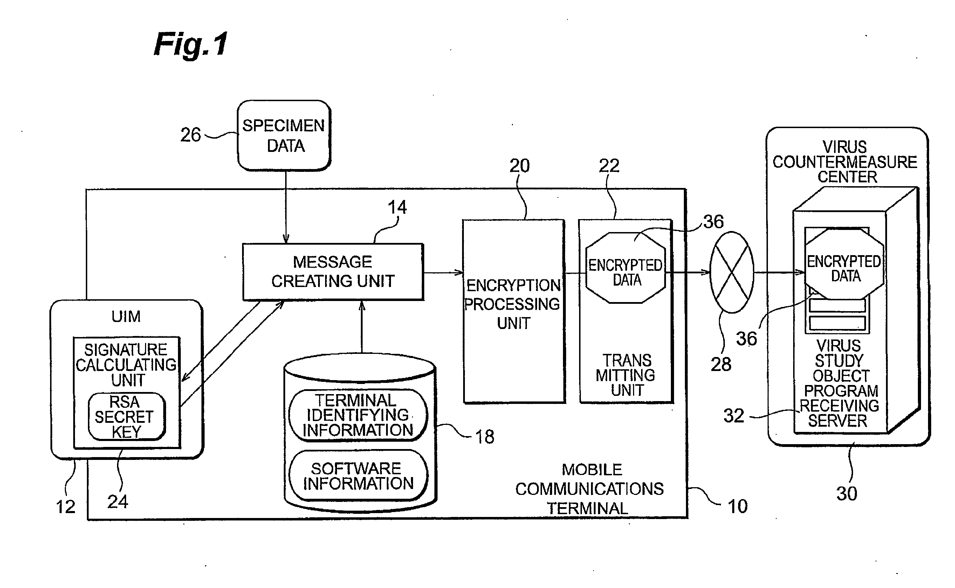

First, a mobile communications terminal that constitutes an embodiment of the present invention will be described. Fig. 1 is a diagram which shows the mobile communications terminal 10 of the present embodiment.

As is shown in Fig. 1, for example, the mobile communications terminal 10 (which is a portable telephone), comprises an information processing device, a storage device such as a memory or the like, an IC chip slot, a transmitting and receiving device, an information display screen and the like as physical constituent elements. An IC chip 12 such as a UIM or the like in which user discriminating information is stored is mounted in the IC chip slot. Furthermore, the mobile communications terminal 10 comprises a message creating unit 14, an information storage unit 18, an encryption processing unit 20 and a transmitting unit 22 as functional constituent elements. Moreover, a signature calculating unit 24 in which a public key encryption program is stored is installed in the IC chip 12 mounted in the mobile communications terminal 10. These respective constituent elements will be described in detail below.

Terminal identifying information and software information are stored in the information storage unit 18. For example, this terminal identifying information is discriminating information that can specify the mobile communications terminal 10 itself or the type of the mobile communications terminal 10, such as the product name, product number or the like. Furthermore, the software information consists of the software name or version information relating to the OS (operating system) or application programs installed in the mobile communications terminal 10. Infection by a computer virus is greatly influenced by the type and version of such OS and application programs.

The message creating unit 14 receives specimen data (programs that are the object of virus protection study) 26 suspected of containing a computer virus that is stored in the mobile communications terminal 10. Furthermore, the message creating unit 14 sends this specimen data 26 to the signature calculating unit 24 of the IC chip 12, and receives specimen data 26 to which a digital signature has been applied from the signature calculating unit 24. Moreover, the message creating unit 14 extracts the abovementioned terminal identifying information and software information from the information storage unit 18, and adds this information to the specimen data 26.

The signature calculating unit 24 of the IC chip 12 applies a digital signature to the specimen data 26 received by the message creating unit 14. This digital signature is produced by the private key of an RSA encryption system generated by a public key encryption program stored in the signature calculating unit 24. Furthermore, the public key (terminal public key) that forms a pair with this private key has been made public, and can easily be obtained by anyone.

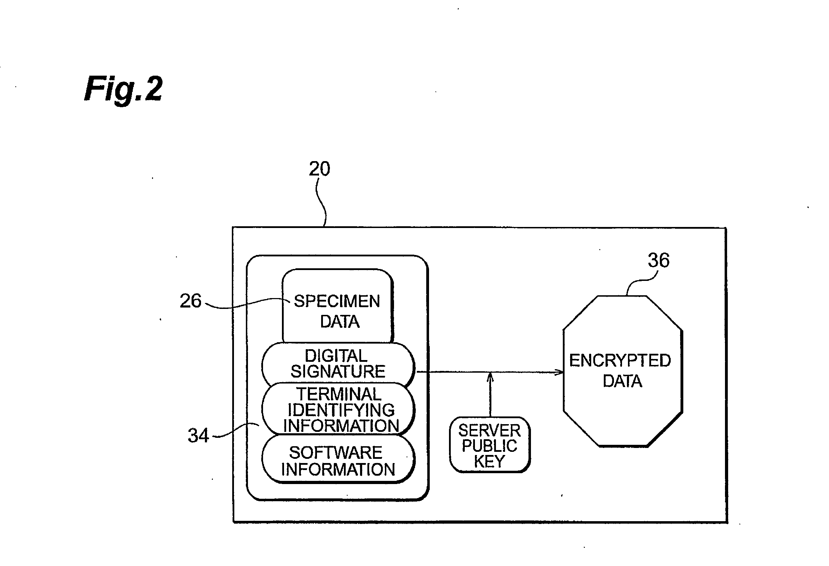

The encryption processing unit 20 receives the specimen data (plain message) to which terminal identifying information and software information has been added, and to which a digital signature has been applied, from the message creating unit 14, and encrypts this plain message 34 (see Fig. 2). The public key that is used in this encryption is a public key (server public key) that forms a pair with a private key stored in the virus protection study object program receiving server 32 in the virus countermeasure center 30 that is the transmission destination of the specimen data 26. Accordingly, the plain message 34 that is encrypted by the encryption processing unit 20 is safely sent to the virus protection study object program receiving server 32 as encrypted data 36.

The transmitting unit 22 transmits the encrypted data 36 to the virus protection study object program receiving server 32 in the virus countermeasure center 30 via a network (e. g., a mobile communications network) 28.

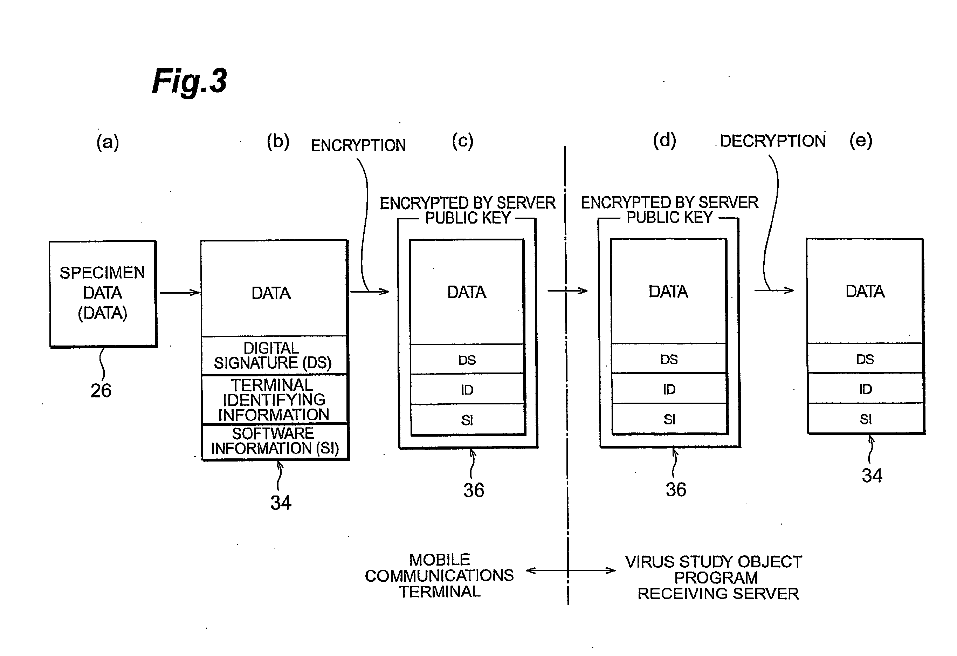

Next, the data transmitting method using the mobile communications terminal 10 will be described. Furthermore, Fig. 3 shows a modification of the specimen data 26.

First, when specimen data 26 is discovered by the user or the like, a transmission instruction for the specimen data 26 is sent to the mobile communications terminal 10 as a result of a menu selection or the like made by the user (see Fig. 3 (a)). As a result, the message creating unit 14 sends the specimen data 26 to the signature calculating unit 24 of the IC chip 12. The signature calculating unit 24 that has received the specimen data 26 produces a digital signature, and applies this digital signature to the specimen data 26. Furthermore, the message creating unit 14 extracts terminal identifying information and software information from the information storage unit 18, and adds this information to the specimen data (see Fig. 3 (b).

The plain message 34 created in the message creating unit 14 from the specimen data 26 to which a digital signature has been applied, the terminal identifying information and the software information is sent to the encryption processing unit 20, and is encrypted (see Fig. 3 (c)). The encrypted data 36 produced by the encryption of the plain message 34 is transmitted from the transmitting unit 22 to the virus protection study object program receiving server 32. Then, the virus protection study object program receiving server 32 that has received the encrypted data 36 decrypts the encrypted data 36 and receives the plain message 34 (see Figs. 3 (d) and 3 (e)). As a result of the mobile communications terminal 10 thus encrypting the plain message 34 (specimen data 26 to which a digital signature has been applied, terminal identifying information and software information) and transmitting this encrypted message to the virus protection study object program receiving server 32, infection of the servers or the like in the network 28 by the specimen data 26 contained in the plain message can be prevented, and the spread of the specimen data 26 by a third party with bad intentions can be prevented.

Next, the merits of the mobile communications terminal and data transmitting method of the present invention will be described. The presence or absence of alterations in the specimen data 26 can be confirmed as a result of a digital signature being applied to the specimen data 26 and this data being transmitted to the virus protection study object program receiving server 32 by the mobile communications terminal 10. Specifically, the virus protection study object program receiving server 32 can obtain a terminal public key that forms a pair with the private key of the signature calculating unit 24 of the IC chip 12, and can verify the digital signature that is applied to the specimen data 26. Furthermore, in cases where the specimen data 26 has been altered at an intermediate point in the network, the verification of the digital signature in the virus protection study object program receiving server 32 fails, so that the fact of this data alteration becomes known. On the other hand, in cases where there has been no alteration of the specimen data 26 at any intermediate point in the network, the verification of the digital signature in the virus protection study object program receiving server 32 is successful, so that it is confirmed that this is a transmission from a legitimate user. Accordingly, the virus protection study object program receiving server 32 can eliminate dangerous specimen data 26 that has been altered, by examining only specimen data 26 with a confirmed origin in which verification of the digital signature is successful. Furthermore, since the transmitting party can be easily and securely specified by means of the digital signature, the safety of the virus protection study object program receiving server 32 that receives the specimen data 26 can be improved.

Furthermore, the terminal identifying information and software information that are added to the specimen data 26 are utilized in the virus protection study of the specimen data 26 in the virus countermeasure center 30. Specifically, by preparing a mobile communications terminal that is the same as the mobile communications terminal 10 of the user, or that is of the same type as the mobile communications terminal 10 of the user, and introducing the same software as that of the mobile communications terminal 10 into this mobile communications terminal on the basis of the terminal identifying information, it is easily possible to realize substantially the same execution environment as that of the user in the virus countermeasure center 30.

In the mobile communications terminal and data transmitting method of the present invention, a digital signature is applied to a program that is the object of virus protection study using a public key encryption program that is stored in and IC chip in which information that identifies the user is stored, and this program that is the object of virus protection study to which a digital signature has been applied is transmitted to a virus protection study object program receiving server. Accordingly, the alteration of this program that is the object of virus protection study can be prevented.

## Claims

1. A mobile communications terminal which applies a digital signature to a program that is the object of virus protection study using a public key encryption program stored in an IC chip in which information that distinguishes the user is stored, and which transmits said program that is the object of virus protection study to which said digital signature has been applied to a server that receives programs that are the object of virus protection study.

2. The mobile communications terminal according to claim 1, wherein terminal identifying information that specifies the terminal type of said mobile communications terminal is transmitted to said server that receives programs that are the object of virus protection study together with said program that is the object of virus protection study to which said digital signature has been applied.

3. The mobile communications terminal according to claim 1 or claim 2, wherein software information that relates to the software that is installed is transmitted to said server that receives programs that are the object of virus protection study together with said program that is the object of virus protection study to which said digital signature has been applied.

4. A data transmitting method in which a digital signature is applied to a program that is the object of virus protection study in a mobile communications terminal using a public key encryption program stored in an IC chip in which information that distinguishes the user is stored, and said program that is the object of virus protection study to which said digital signature has been applied is transmitted from said mobile communications terminal to a server that receives programs that are the object of virus protection study.

5. The data transmitting method according to claim 4 , wherein terminal identifying information that specifies the terminal type of said mobile communications terminal is transmitted from said mobile communications terminal to said server that receives programs that are the object of virus protection study together with said program that is the object of virus protection study to which said digital signature has been applied.

6. The data transmitting method according to claim 4 or claim 5, wherein software information that relates to the software installed in said mobile communications terminal is transmitted from said mobile communications terminal to said server that receives programs that are the object of virus protection study together with said program that is the object of virus protection study to which said digital signature has been applied.
